# EUROPÄISCHE PATENTSCHRIFT

(11) **EP 1 381 846 B1**
(45) Veröffentlichungstag und Bekanntmachung des Hinweises auf die Patenterteilung: **29.09.2004**
(21) Anmeldenummer: 02745294.5
(22) Anmeldetag: 14.05.2002
(51) Int. Cl.: G01N 15/14, G06F 19/00

(54) **VERFAHREN ZUR ANALYSE EINER BIOLOGISCHEN PROBE**
METHOD FOR ANALYZING A BIOLOGICAL SAMPLE
PROCEDE D'ANALYSE D'UN ECHANTILLON BIOLOGIQUE

(30) Priorität: 18.05.2001 DE 10124340
(43) Veröffentlichungstag der Anmeldung: 21.01.2004
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHMIDT, Robert, 90431 Nürnberg (DE); WITTENBERG, Thomas, 91054 Erlangen (DE); GERHÄUSER, Heinz, 91344 Waischenfeld (DE); SPINNLER, Klaus, 91056 Erlangen (DE)
(74) Vertreter: Schoppe, Fritz, Dipl.-Ing.
(86) Internationale Anmeldenummer: PCT/EP2002/005316
(87) Internationale Veröffentlichungsnummer: WO 2002/095394

(56) Entgegenhaltungen:
- US-A- 5 162 990

## Beschreibung

Die vorliegende Erfindung bezieht sich auf ein Verfahren zur Analyse einer biologischen Probe, und insbesondere auf ein Verfahren zur Analyse einer Gewebeprobe, um gutartige oder bösartige Gewebeveränderungen im Zuge der Früherkennung und Vermeidung von Krebs zu erkennen.

Weltweit sterben jährlich etwa 6,6 Millionen Menschen an Krebs. In den Industrieländern ist diese Krankheit die zweithäufigste Todesursache. Trotz großer finanzieller und wissenschaftlicher Anstrengungen ist es bis heute nicht gelungen, einen entscheidenden Durchbruch der erfolgreichen Behandlung von Tumorerkrankungen zu erzielen. Aus heutiger Sicht ist eine deutliche Reduzierung der Krebsinzidenzen und - mortalität nur durch innovative Lösungen im Bereich der Früherkennung, Prognose und Prävention von Krebs möglich.

Ein wirksames Mittel zur Früherkennung und Vermeidung von Krebs sind regelmäßige Vorsorgeuntersuchungen. Mit Hilfe der Krebsvorsorge lassen sich existierende Tumorzellen, aber auch noch gutartige Gewebeveränderungen, sogenannte Dysplasien, nachweisen. Diese entwickeln sich in einigen Fällen zu Tumoren weiter, meistens bilden sie sich aber wieder zurück oder bleiben unverändert. Eine gesicherter Progressionseinschätzung der Gewebeveränderungen ist mit den gegenwärtig angewandten diagnostischen Verfahren nicht möglich.

Die Krebsvorsorgeuntersuchungen basieren zu einem Großteil auf der zytologischen und histologischen Analyse von Gewebeproben unter dem Mikroskop. Die Interpretation der mikroskopischen Bilder erfordert höchste Fachkompetenz und viel Routine. Die Verfahren digitaler Bildverarbeitung und Mustererkennung bieten bei der Klassifikation hochkomplexer und manchmal auch sehr seltener Befundbilder für die Anwendung bestechende Vorteile, da sie neutral und unabhängig von der subjektiven Befindlichkeit des Betrachters sind. Gleichwohl konnte bislang mit automatischen Verfahren der Zellanalyse - basierend auf Grauwertbildern - die erforderliche Klassifikationssicherheit nicht erreicht werden. Speziell für die Vorsorgeuntersuchung des Zervixkarzinoms anhand eines gynäkologischen Abstriches der Zervix (Gebärmutterhals) sowie für die Auswertung von Bronchialsekretproben wurden automatisierte Verfahren entwickelt, die jedoch nur mit sehr begrenzter Sensitivität bzw. Spezifität vorhandene Tumorzellen erkennen können.

Mit Hilfe des Verfahrens nach Papanicolaou (PAP-Test; zytologisches Färbeverfahren zur Identifizierung von prämalignen und malignen (bösartigen) Zellen in Zervixabstrichen) ist es gelungen, die Inzidenz (Eintritt) für Zervixtumore in den westlichen Ländern und in Japan um etwa 70% zu reduzieren. Dennoch weist dieser Test erhebliche Defizite auf, die darin bestehen, daß die Rate der unklaren Befunden bei 5 bis 10% liegt, und die Rate der falsch negativen Befunde bei 5 bis 50% liegt.

In den letzten Jahren wurden daher eine Reihe neuer Verfahren entwickelt, die den oben beschriebenen PAP-Test ersetzt haben.

Ein verfahren verwendet eine automatisierte Dünnschicht-Zell-Präparationstechnik, mit der dysplastische Zellen beim vorliegen nur sehr geringer Mengen auffälligen Zellmaterials deutlich besser identifiziert werden können. Dieses Verfahren wurde 1996 von der amerikanischen FDA (Food and Drug Association) als Ersatz für die herkömmlichen PAP-Tests zugelassen und soll laut Ergebnissen von klinischen Studien die Entdeckung von Dysplasien um 65% verbessern.

Ferner ist ein Computer-gestütztes Bildanalyseverfahren bekannt, das bereits heute hauptsächlich in zytologischen Großlabors eingesetzt wird. Im Gegensatz zum PAP-Test, bei dem die mikroskopische Beurteilung der Abstriche manuell vorgenommen wird, ermöglicht dieses Verfahren eine objektive Beurteilung von Zellabstrichen. Klinische Studien in den USA haben ergeben, daß diese automatisierten Verfahren zu einer Reduzierung der falsch negativen Befunde führen. Der gerade beschriebene Test ist in den USA seit 1998 als Routinediagnostik für die Zervix-Krebsvorsorge zugelassen.

Die gerade beschriebenen Weiterentwicklungen des PAP-Tests sind dazu geeignet, die Qualitätsnachteile der herkömmlichen Verfahren zumindest teilweise zu beheben. Sind aber, genau so wie der PAP-Test selbst, nicht in der Lage, eine zuverlässige Progressionseinschätzung von Dysplasien vorzunehmen. Wiederholungs- und Zusatzuntersuchungen zur diagnostischen Abklärung und zur Kontrolle von Dysplasien werden auch bei Einsatz einer verbesserten Probenvorbereitung und einer automatisierten Analyse nach wie vor erforderlich bleiben. Die hierbei eingesetzten konventionellen Bildanalyseverfahren bieten bei der Klassifikation hochkomplexer und seltener Befundbilder gegenüber der manuellen Zellanalyse zwei erhebliche Vorteile, gleichwohl kann mit diesen Technologien die erforderliche Klassifikationssicherheit nicht erreicht werden. Die Verfahren sind lediglich in der Lage, mit sehr begrenzter Sensitivität und Spezifität (kleiner 70%) vorhandene Tumorzellen und Dysplasien zu erkennen.

1996 wurde ein DNA-Test für den Nachweis von humanen Papillomviren für die Zervix-Krebsvorsorge eingeführt. Eine Reihe von Untersuchungen hat gezeigt, daß zwischen der Infektion mit humanen Papillomviren (HPV) und der Entstehung von Zervix-Läsionen und -Krebs eine enge Verknüpfung besteht. HPV läßt sich in ca. 99% aller invasiven Zervix-Karzinome und in mehr als 90% der höhergradigen Vorstufen nachweisen. Die HPV-Typisierung ist in den westlichen Industrieländern als die diagnostische Zusatzuntersuchung bei Frauen mit leichten und mittleren Dysplasien anerkannt. Das Problem des HPV-Tests für die Zervix-Krebsvorsorge liegt allerdings in seiner hohen Rate an falsch positiven Befunden. Bis zu 80% aller Frauen bekommen im Laufe ihres Lebens eine HPV-Infizierung, aber nur etwa 2 bis 4% aller Frauen weisen tatsächlich Dysplasien auf und nur ca. 1 bis 2% dieser Frauen erkranken an einem Zervix-Karzinom.

Ferner ist im Stand der Technik ein Verfahren zur Erkennung des Blasenkrebses bekannt, welches auf der NMP-Technologie (Nuclear Matrix Protein Technologie) basiert. NMP sind in den Zellkernen des Epithelgewebes vorhanden und weisen bei Blasenkrebspatienten deutlich erhöhte Werte auf, die im Urin durch spezifische Antikörper nachgewiesen werden können. Ergebnisse aus klinischen Studien zeigen, daß die NMP-Technologie Zervix-Dysplasien und -Tumore mit einer deutlich höheren Sensitivität als der herkömmliche PAP-Test nachweist.

Ein weiteres Verfahren zur Zervix-Krebsvorsorge ist die Identifikation von spezifischen Proteinmarkern, die bei dysplastischen Zellen und in Tumorzellen überexprimiert sind. Ergebnisse aus klinischen Studien betreffend dieses Verfahren sind nicht bekannt.

Ebenso wie die Weiterentwicklungen des PAP-Tests können auch die HPV-Typisierung und Protein-Marker einen deutlichen Beitrag zur Qualitätsverbesserung in der Zervix-Vorsorgezytologie leisten. Keines dieser In-Vitro-Diagnoseverfahren ist allerdings in der Lage, eine objektive Progressionsaussage zur Entwicklung einer Zelle in einem Tumor zu treffen. Zusatz- und Wiederholungsuntersuchungen sowie Operationen, die bei persistierenden oder progressiven Läsionen aus Sicherheitsgründen erfolgen, können dadurch nicht verhindert werden.

In der EP 0 647 844 A wird ein Verfahren zur interaktiven automatischen Zytologie beschrieben, bei dem ein automatisiertes System und ein Bediener parallel eine Diagnose erstellen, und in einem abschließenden Schritt die Systemdiagnose mit der Bedienerdiagnose verglichen wird. Dieses Verfahren hat den Nachteil, daß auch hier eine Diagnose durch einen Bediener erstellt werden muß. In den US Patenten 5,7557,954 und 5,978,497 werden Verfahren zur automatischen Segmentierung eines Bildes, welches eine biologische Probe darstellt, näher beschrieben, wobei einzelne Objekte auf der Grundlage von vorbestimmten Merkmalen klassifiziert werden.

In der DE 19747415 A1 wird ein Verfahren beschrieben, um eine Analyse einer biologischen Probe durch einen Zytologen zu vereinfachen, indem aus einer Probe diagnostisch signifikantes Material bestimmt wird, und ein "Weg" durch die Probe festgelegt wird, so daß der Betrachter nur noch die relevanten Proben betrachten muß.

In US 5 162 990 A wird ein Verfahren zur Analyse einer biologischen Probe beschrieben, in dem bei verschredenen Aufnahmemodalitäten erfasste Bilder getzennt verarbeitet werden. Die verarbeiteten Bilder werden zu einem Bild kombiniert, das weiter verarbeitet und analysiert wird.

Neben den oben beschriebenen Veröffentlichungen im Zusammenhang mit der Untersuchung von Zellen sind im Stand der Technik ferner digitale Bildverarbeitungssysteme bekannt, welche beispielsweise in der DE 19834718 A1, der DE 19612465 A1 und der DE 19538004 A1 beschrieben sind. Diese Patente betreffen allgemeine Bilderfassungs- und -Klassifikationssysteme, die jedoch für die Untersuchung von biologischen Proben auf etwaige gutartige oder bösartige Veränderungen keine ausreichende Klassifikationssicherheit gewährleisten.

Ausgehend von dem oben beschriebenen Stand der Technik liegt der vorliegenden Erfindung die Aufgabe zugrunde, ein verbessertes, automatisches Verfahren zur sicheren Analyse einer biologischen Probe zu schaffen, um gutartige oder bösartige Veränderungen gegenüber einer gesunden Probe sicher und schnell zu erkennen.

Diese Aufgabe wird durch ein Verfahren gemäß Anspruch 1 gelöst.

Die vorliegende Erfindung schafft ein Rechner implementertes Verfahren zur Analyse einer biologischen Probe, um eine Veränderung gegenüber einer gesunden biologischen Probe zu bestimmen, mit folgenden Schritten:
Erzeugen eines ersten Bildes der biologischen Probe bei einer ersten Aufnahmemodalität;
Erzeugen eines zweiten Bildes der biologischen Probe bei einer zweiten Aufnahmemodalität;
Klassifizieren des ersten Bildes anhand eines ersten vorbestimmten Parameters ;
Klassifizieren des zweiten Bildes anhand eines zweiten vorbestimmten Parameters, wobei das erste Bild unabhängig von dem zweiten Bild klassifiziert wird; und
abhängig von den Klassifikationsergebnissen, Bestimmen, ob die biologische Probe eine Veränderung gegenüber einer gesunden biologischen Probe aufweist.

In dem bevorzugten Ausführungsbeispiel der vorliegenden Erfindung wird ein immunozytometrisches Verfahren geschaffen, welches es ermöglicht, Tumorzellen eindeutig zu identifizieren und die Progression dysplastischer Zellen in Tumorzellen zu prognostizieren.

Hierbei liegt der vorliegenden Erfindung das innovative Konzept zugrunde, bei dem erstmals morphometrische (durch Messung erfaßte) Zellbildinformationen mit Informationen über den Grad der oxidativen DNS-Schädigung, die bei Tumorzellen und bei sich in Tumorzellen umwandelnde präkanzerösen Zellen signifikant erhöht ist, kombiniert wird. Die morphometrischen Bildinformationen werden durchlichtmikroskopisch erhalten. Die Bestimmung der DNS-Schadensmengen in einzelnen Zellen erfolgt im Fluoreszenzmikroskop durch die Messung der Fluoreszenzsignale, die von spezifisch an definierte DNS-Schäden (8-Oxoguanin) gebundenen Antikörper ausgesandt werden.

Der Vorteil der vorliegenden Erfindung besteht darin, daß ein im Vergleich zu bestehenden Verfahren signifikanter Zugewinn an Bildinformationen mit neuen wissensbasierten, trainierbaren Bildauswerteverfahren vereint wird, und somit eine mit Blick auf die Klassifikationssicherheit und die Anwendungssensibilität bislang unerreichte Verfahrenstechnik entwickelt wurde.

Gemäß einem bevorzugten Ausführungsbeispiel findet das erfindungsgemäße Verfahren seine Anwendung bei der Analyse von Gebärmutterhals-Abstrichen (Zervix). Als Fortschritt zur Analyse dieser Probe wird ein optimierter Prozeß zur Aufbereitung dieser Proben durchgeführt, während dem Schleim entfernt wird, Zellen auf dem Träger vereinzelt werden, eine hochgenaue reproduzierbare Präparation und Behandlung mit Antikörpern durchgeführt wird. Anschließend erfolgt bei diesem Ausführungsbeispiel die Gewinnung mikroskopischer Durchlicht-, Farbkontrast- sowie Fluoreszenz-Aufnahmen von hoher Güte, die mittels eines rechnergestützten Bildauswertesystems eine automatische Erkennung von Dysplasien und deren Prognose bzw. von tumorverdächtigen Zellen in den mikroskopischen Bildaufnahmen durchführen.

Ein Vorteil dieser Vorgehensweise besteht darin, daß die Bildinformationen auf dem Objektträger nicht nur systematisch digital erfaßt und archiviert werden, sondern die subjektive Befundungskompetenz des medizinischen Fachpersonals wird durch die objektive, rechnergestützte Komponente ersetzt.

Die vorliegende Erfindung ist nicht auf die Untersuchung von zervix-Abstrichen beschränkt, sondern ist ebenso auf die Früherkennung anderer Krebsarten übertragbar, wie z. B. das Harnblasen-, Mamma-, Lungen- und Schilddrüsenkarzinom, sowie auf maligne Ergüsse und ähnliches.

Nachfolgend werden anhand der beiliegenden Zeichnungen bevorzugte Ausführungsbeispiele der vorliegenden Erfindung näher erläutert. Es zeigen:
- Fig. 1: eine schematische Darstellung eines ersten Ausführungsbeispiels des erfindungsgemäßen Verfahrens; und
- Fig. 2A und B: eine detailliertere Darstellung der einzelnen Schritte des anhand der Fig. 1 beschriebenen Ausführungsbeispiels.

Bevor nachfolgend näher bevorzugte Ausführungsbeispiele der vorliegenden Erfindung dargelegt werden, werden nachfolgend allgemeine Aspekte der Erfindung nochmals erläutert.

Eine Möglichkeit zur Erkennung von Tumorzellen besteht darin, deren oxidative DNS-Schädigung zu erfassen. Die Tumorzellen weisen stets eine höhere oxidative DNS-Schädigung auf als Zellen des entsprechenden Normalgewebes. Dies geht aus einer Reihe von Publikationen über den Gehalt der mutagenen Basenschädigung 8-Oxoguanin und anderer oxidativer DNS-Veränderung in Tumor- und Normalgeweben des Gastrointestinaltrakts und von Lunge, Prostata, Gehirn, Ovarien, Brust, etc. hervor, wie dies beispielsweise in Olinski u. a. (1992) FEBS Lett. 309, 193-198; Jaruga u. a. (1994) FEBS Lett. 341, 59-64; Musarrat u. a. (1996) Eur. *J. Cancer* 32A, 1209-1214; Malins u. a. (1996) Proc. Natl. Acad Sci. USA 93, 2557-2563; Matsui u. a. (2000) Cancer Lett. 151, 87-95. Selbst in Leukämiezellen wurden erhöhte 8-oxoguanin-Spiegel gefunden (Senturker u. a. (1997) FEBS Lett., 416, 286-290). Die Persistenz dieser Schäden führt in der zellulären DNS des Zielgewebes (z. B. des Tumorgewebes) zur Ausprägung definierter Mutationsmuster, die für oxidative DNS-Schäden typisch sind, wie es z. B. in Moriva (1993) Proc. Natl. Acad. Sci. USA, 90, 1122-1126; Reid u. a. (1993) Proc. Natl. Acad. Sci. USA, 90, 3904-3907; Du u. a. (1994) Mol. Carcinog., 11, 170-175; Turker u. a., (1999) Cancer Res., 59, 1837-1839 beschrieben wird.

Weitere Untersuchungen haben erhöhte 8-Oxoguanin-Werte nicht nur in Tumoren, sondern auch in präkanzerösen Geweben gezeigt (Musarrat u. a. (1996) Eur. J. Cancer 32A, 1209-1214; Olinski u. a. (1995) Free Radic. Boil. Med., 18, 807-813. Somit entstehen oxidative DNS-Schäden bereits in Krebsvorstufen, und möglicherweise sind sie für die Entstehung von Krebszellen verantwortlich. Tierexperimentelle Untersuchungen haben diese Vermutung bestätigt. Es besteht tatsächlich ein ursächlicher Zusammenhang zwischen der Bildung und Persistenz erhöhter 8-Oxoguanin-Gehalte und der Entstehung von Tumoren, wie dies z. B. in Driscoll u. a. (1995) Exp. Lung Res., 21, 941-956; Nehls u. a. (1998) Environ. Health Perspect., 105 Suppl. 5, 1291-1296) beschrieben ist. Neben dieser Beobachtung haben die Untersuchungen die nachfolgend dargelegten drei weiteren wichtigen Informationen geliefert:
(a) Die Entstehung oxidativer DNS-Schäden geht der Tumorentstehung lange voraus.
(b) Die oxidative Schädigung der DNS muß über einen langen Zeitraum hinweg andauern (persistieren), bis Krebs entsteht. Für die Entwicklung von Zervix-Tumoren aus prämalignen Vorstufen (TIN III) sind bei der Frau durchschnittlich 16 Jahre ermittelt worden (Forsmo u. a. (1997) Int *J. Cancer*, 71, 4-8).
(c) Die oxidative Schädigung muß in der DNS teilungsfähiger Zellen erfolgen. Nur in diesen Zellen werden die Schäden während der DNS-Replikation in Mutationen überführt und auf die Tochterzellen weiter vererbt.

Der Grad der oxidativen DNS-Schädigung kann somit dazu herangezogen werden,
- eine bestehende Tumorzelle zu identifizieren, oder
- zu prognostizieren, ob sich eine Dysplasie zu einem Tumor weiter entwickeln wird.

Ferner ist für das erfindungsgemäße Verfahren eine Probenaufbereitung erforderlich, welche gemäß einem Ausführungsbeispiel ein immunzytochemisches Verfahren verwendet. Immunzytochemische Verfahren werden in der Diagnostik bislang nur begrenzt eingesetzt, wofür es die zwei folgenden Gründe gibt. Im Gegensatz zu immunhistochemischen Untersuchungen an Paraffin-eingebetteten Geweben ist die Immunzytochemie schwieriger standardisiert durchzuführen, und die Qualität der immungefärbten zytologischen Präparate weist starke Schwankungen auf. Darüber hinaus ist nach den verschiedenen Inkubationsschritten für immunzytochemische Färbungen die Morphologie der Zellen stark beeinträchtigt. Gemäß der vorliegenden Erfindung wird ein Verfahren angewandt, bei dem immunzytochemische Färbungen qualitätsgesichert und ihre Reproduktion standardisiert sind, so daß die Morphologie der bearbeiteten Zellen besser erhalten bleibt und eine Bildauswertung zuverlässig erfolgt. Durch eine möglichst frühe Probenaufbereitung bzw. optimierte Fixierung der Zellpräparate unmittelbar nach der Entnahme sowie eine modifizierte Papanicolau- oder Pappenheim-Färbung in Kombination mit der Immunzytochemie ermöglicht das Erhalten besserer und mehr standardisierter Ergebnisse. Hierdurch wird eine optimierte Probenaufbereitung und eine Anfärbung der Zellen erreicht, wodurch sowohl konventionelle lichtmikroskopische als auch automatisierte Auswertungen zuverlässiger durchgeführt werden können.

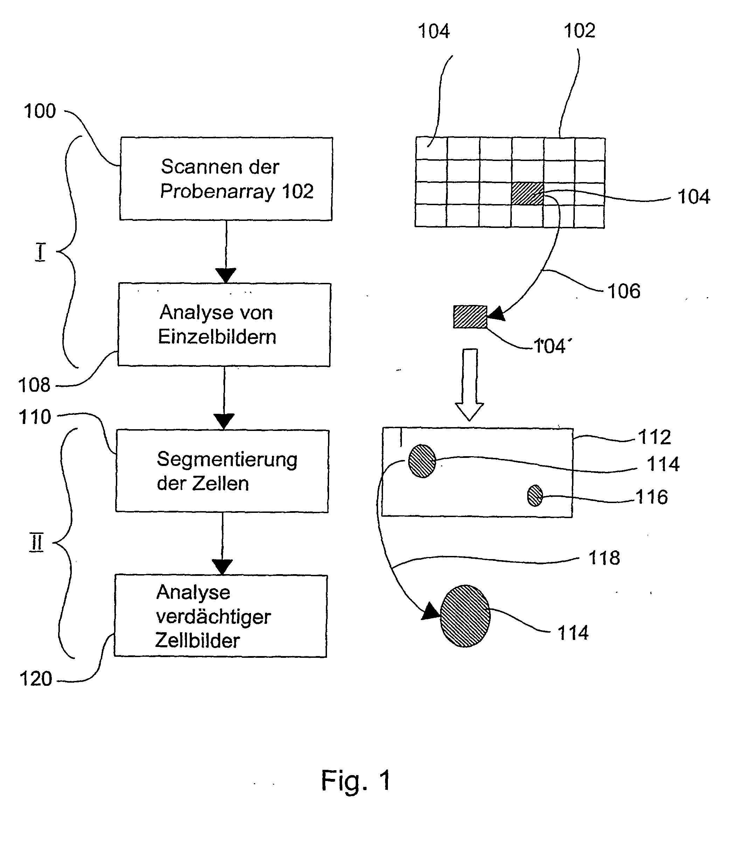

In Fig. 1 wird eine schematische Darstellung eines ersten Ausführungsbeispiels des erfindungsgemäßen Verfahrens dargestellt. Die einzelnen Verfahrensschritte sind in den Blöcken in der linken Spalte gezeigt, und parallel zu der linken Spalte sind in der rechten Spalte die entsprechenden Gegenstände oder Elemente dargestellt, auf die die einzelnen Schritte einwirken.

Grundsätzlich unterteilt sich das erfindungsgemäße Verfahren gemäß dem dargestellten Ausführungsbeispiel in einen ersten Teilschritt I und in einen zweiten Teilschritt II.

Im Teilschritt I wird zunächst im Schritt 100 das Probenarray 102 abgetastet bzw. gescannt. Das Probenarray 102 umfaßt eine Mehrzahl von Einzelproben 104, wobei aufgrund des Schritts 100 eine biologische Probe 104' aus dem Array 102 ausgewählt wird, wie dies anhand des Pfeils 106 verdeutlicht ist. Nachdem eine einzelne Probe 104' ausgewählt wurde, erfolgt im Schritt 108 eine Analyse von Einzelbildern bezüglich der Probe 104', wie dies nachfolgend noch näher erläutert wird.

Ausgehend von den Analyseergebnissen der Einzelbilder wird bestimmt, ob die biologische Probe 104' tumorverdächtig ist oder nicht. Ist die Tumorverdächtigkeit bejaht worden, so geht das Verfahren gemäß dem in Fig. 1 dargestellten Ausführungsbeispiel zum zweiten Teilschritt II über, in dem im Schritt 110 zunächst die Einzelbilder so segmentiert werden, daß Teilbilder mit einzelnen Zellen entstehen, wie dies beispielhaft in Fig. 1 bei 112 gezeigt ist, die ein Teilbild mit zwei einzelnen Zellen 114 und 116 zeigt. Wie mittels dem Pfeil 118 dargestellt ist, wird eine Zelle, in dem gezeigten Beispiel die Zelle 114 ausgesucht und im Schritt 120 erfolgt eine Analyse dieser verdächtigen Zelle 114. Abhängig von dem Analyseergebnis kann festgestellt werden, ob es sich bei der tumorverdächtigen Zelle tatsächlich um eine bereits existierende Tumorzelle handelt, oder ob es sich hierbei um eine gutartige oder bösartige Dysplasie handelt.

Gemäß dem erfindungsgemäßen Verfahren werden aus vorklassifizierten Referenzdatensätzen mathematische Merkmalsoperatoren iterativ ermittelt, um die erfaßten Bilder der biologischen Proben zu klassifizieren. Eine Separierung von Proben mit jeweils einem dominanten Merkmalstyp ermöglicht die Ermittlung eines zugehörigen Operatorensatzes. Lassen sich zueinander orthogonale Operatoren eindeutig den interessierenden Merkmalstypen zuordnen, so kann ihre Unterscheidung innerhalb eines Bilddatensatzes realisiert werden.

Bei den bisher bekannten Ansätzen zur automatischen Zytologie und Zytometrie wurden die verwendeten Operatoren zur Extraktion von Struktur- und Formmerkmalen nach dem Versuchs- und Irrtums-Prinzip ermittelt. Diese Vorgehensweise hat ihre Grenze spätestens dort, wo sehr komplexe und spezifische Muster innerhalb variierender Kontexte erkannt werden müssen. Das Problem besteht hierbei darin, daß das Ausprobieren einer vielzahl von Operatoren auf eine Referenzstichprobe zur Ermittlung der Relevanz hinsichtlich des Erkennungsziels, aufgrund der enormen Größe des Suchraums, zu Rechenzeiten von mehreren Jahren führt. Da es sich bei der Zellanalyse um äußerst komplexe und in ihrer Ausprägung auch sehr variante Mustererkennungsaufgaben handelt, bedarf es hier eines neuen Ansatzes, wie er gemäß der vorliegenden Erfindung gelehrt wird. Unter den Randbedingungen begrenzt verfügbarer Rechenleistung und praktikabler Rechenzeit werden aus einer vorhandenen Operatorenbibliothek diejenigen Operatoren ausgewählt, die zu einem optimalen Klassifikationsergebnis beitragen.

Gemäß dem anhand der Fig. 1 beschriebenen Ausführungsbeispiel erfolgt diese Auswahl im Teilschritt I und im Teilschritt II.

Im Teilschritt I wird die Selektion der Operatoren global auf der Ebene eines Bildes 104' angewandt, wobei unter einem solchen Bild 104' eine Einheit verstanden werden kann, die ein Zytologe als Ganzes - eventuell mit unterschiedlichen Vergrößerungen - durch das Okular seines Mikroskops sieht. Aus einer normalen zytologischen Probe lassen sich je nach Vergrößerungsfaktor zwischen 12 und 500 solcher Bilder abspeichern. Die automatische Parameterselektion läßt sich dabei unabhängig voneinander auf Einzelbilder von unterschiedlicher Modalität, wie Durchlicht, Phasenkontrast und Fluoreszenz wie auch auf verschiedenen Zellarten (Zervix, Blase, Lunge, etc.) durchführen. Bei einer ausreichend sicher vorklassifizierten Bildstichprobe ergibt sich ein gutes Selektionsergebnis.

Im Teilschritt II - bei Vorliegen verdächtiger Zellen - folgt die Objektsegmentierung und die Teilanalyse auf der Ebene der Einzelzelle mit maximaler Auflösung. Hier werden Zelldimensions-, Form- und Strukturmerkmale erfaßt, wobei auch hier der Ansatz der Textur-Parameter-Selektion eingesetzt wird. Ferner werden morphometrische Parameter bestimmt.

Erfindungsgemäß werden langjährige Erfahrungen von Zytologen und Zytologie-Assistenten bei der Begutachtung und Evaluierung von mikroskopischen histologischen Befunden bei der Auswahl der für die Klassifizierung einer Zelle zu verwendenden Zellbild- und Zellparameter mit einem eher objektiven Ansatz zur automatischen Parameterselektion gekoppelt. Da eine vollständige, optimale Suche zur Auswahl von idealen Parametern eine Rechenzeit von mehreren Jahren in Anspruch nehmen würde, wird das vorhandene Expertenwissen syntaktisch und semantisch in die automatische Selektion - gekoppelt mit einer Gewichtungsfunktion - integriert.

Hierdurch werden die folgenden Vorteile realisiert:
- Die Parameterselektion wird anhand einer großen vorklassifizierten Stichprobe in mehreren Lernphasen durchgeführt. Variationen zur Optimierung können neu trainiert werden und in Konfigurationsdateien abgespeichert werden.
- Durch die Erstellung mehrerer Konfigurationsdatensätze lassen sich mit einem Klassifikationssystem unterschiedliche zytologische Präparate (Zervix, Blase, Lunge, ...) untersuchen und die erforderlichen Algorithmen adaptieren. Dadurch sind solche Klassifikationssysteme nicht mehr auf eine Anwendung limitiert und ermöglichen die Bearbeitung eines Großteils der zytologischen und histologischen Prüfaufgaben.

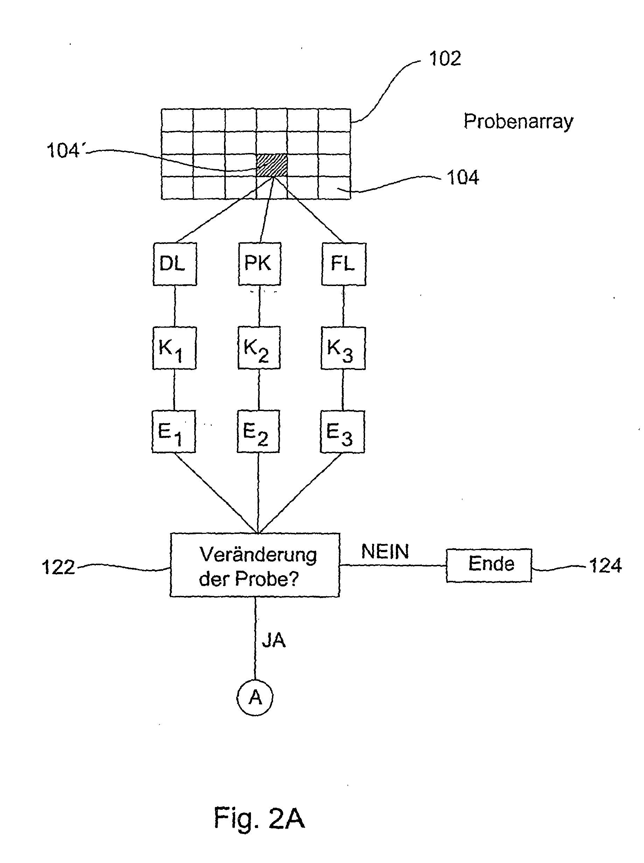

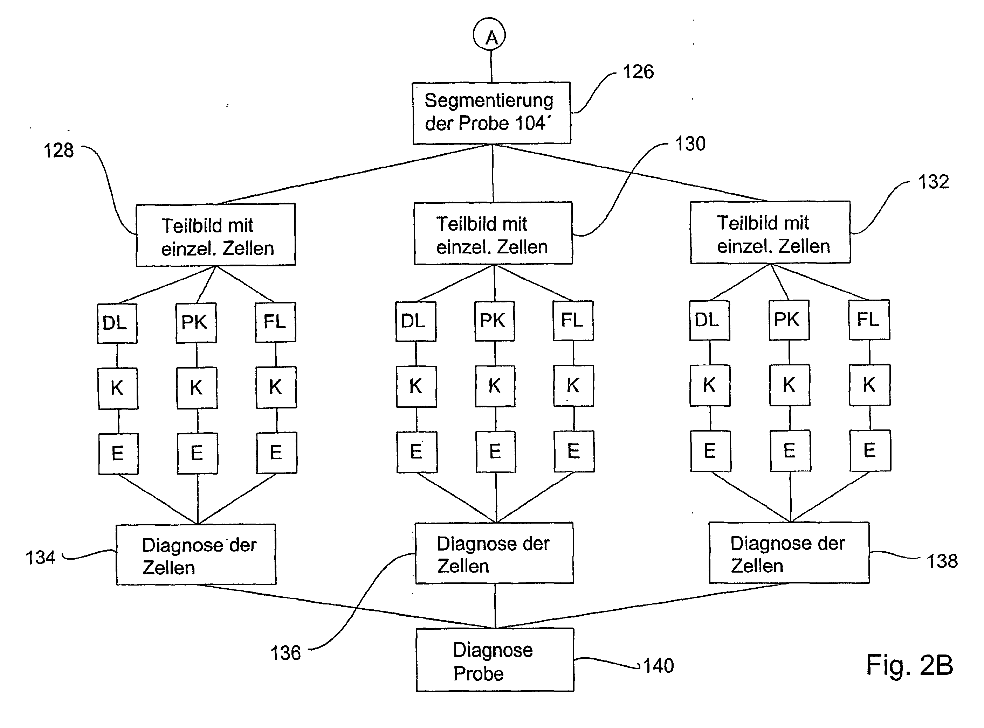

In Fig. 2 ist eine detailliertere Darstellung des anhand der Fig. 1 beschriebenen Ausführungsbeispiels der vorliegenden Erfindung dargestellt. Aus dem Probenarray 102 mit der Vielzahl von Einzelproben 104 wird eine Einzelprobe 104' zur Analyse ausgewählt.

Bezüglich dieser Einzelprobe 104' werden drei Teilbilder erzeugt, wie dies durch die Blöcke DL, PK und FL angezeigt ist. Das erste Teilbild wird mittels einer ersten Aufnahmemodalität, nämlich der mikroskopischen Durchlichtaufnahmemodalität (DL) erzeugt. Das zweite Teilbild wird mittels der Aufnahmemodalität Phasenkontrast (PK) gewonnen, und das dritte Teilbild wird mittels der Aufnahmemodalität Fluoreszenz (FL) gewonnen. Jedes gewonnene Teilbild DL, PK, FL wird getrennt voneinander mittels eines ausgewählten Parametersatzes klassifiziert, wie dies durch die Blöcke K₁, K₂ und K₃ angezeigt ist. Aus der Klassifikation der einzelnen Teilbilder ergeben sich entsprechende Klassifikationsergebnisse für jedes Teilbild, wie dies durch die Blöcke E₁, E₂ und E₃ angezeigt ist. Im Schritt 122 wird auf der Grundlage der Ergebnisse E₁, E₂ und E₃ bestimmt, ob eine Veränderung der Probe 104' gegenüber einer gesunden Probe vorliegt. Wird dies verneint, so endet das Verfahren gemäß dem dargestellten Ausführungsbeispiel im Schritt 124. Wird eine Veränderung der Probe, z. B. ein Tumorverdacht, bejaht, so geht das Verfahren weiter zum Schritt 126 in Fig. 2B. Im Schritt 126 erfolgt die bereits oben beschriebene Segmentierung der Probe 104' derart, daß die Probe in einzelne Bereiche unterteilt wird, die im wesentlichen eine Zelle oder nur einzelne Zellen umfaßt, wie dies in Fig. 2B schematisch bei 128, 130 und 132 gezeigt ist.

Für jeden der Abschnitte 128 bis 132 bzw. für jedes Teilbild mit einzelnen Zellen werden wiederum Teilbilder in den bereits oben beschriebenen drei Aufnahmemodalitäten, Durchlicht, Phasenkontrast, Fluoreszenz (DL, PK, FL), erzeugt, wie dies durch die entsprechenden Blöcke in Fig. 2B dargestellt ist. Anschließend erfolgt eine Klassifikation der einzelnen Teilbilder, wie dies durch die Blöcke K in Fig. 2B dargestellt ist. wie oben beschrieben erfolgt auch hier die Klassifikation der einzelnen Teilbilder bei unterschiedlichen Aufnahmenmodalitäten unabhängig voneinander um entsprechende Klassifikationsergebnisse (siehe Blöcke E) zu erlangen.

Auf der Grundlage der Klassifikationsergebnisse der einzelnen Abschnitte bzw. Teilbilder werden entsprechende Diagnosen der Zelle bzw. Zellen 134, 136, 138 erlangt, die im Schritt 140 zur Diagnose der gesamten biologischen Probe herangezogen werden.

Das anhand der Fig. 2 beschriebene, detailliertere Ausführungsbeispiel umfaßt zunächst die Vorklassifikation auf der Bildebene, wie dies in Fig. 2A gezeigt ist. Für jede der zu untersuchenden Proben 104 werden drei Einzelbilder erzeugt, die mittels der Aufnahmemodalitäten Durchlicht (DL), Phasenkontrast (PK) und Fluoreszenz (FL) gewonnen werden. Diese drei Bilder werden zunächst getrennt voneinander auf der Bildebene, d. h. jedes als Ganzes, klassifiziert. Hierbei wird ein erweitertes und modifiziertes automatisches Texturanalyseverfahren verwendet, dessen Erweiterung darin besteht, daß eine Ergänzung durch Texturverfahren integriert ist, die speziell für zytologische Präparate notwendig ist. Ferner ist eine Integration von vorhandenem Expertenwissen gegeben. Erfindungsgemäß erfolgt eine automatische Selektion der für diese Klassifikationsaufgaben notwendigen und hinreichenden Parameter aus einem Fundus von ca. 600 bis 1000 Texturparametern (Farb-, statistische-, Textur-, Formparameter). Die erforderlichen Parameter werden aufgrund einer repräsentativen Bildstichprobe durch eine intelligente Selektion ermittelt, wobei unter anderem die Güte, die Aussagekraft und die Trennschärfe der gewählten Parameter bei der Klassifikation eine Rolle spielen. Für jede Aufnahmemodalität (DL, PK und FL) wird unabhängig voneinander jeweils ein eigener Parametersatz zur Klassifikation bestimmt.

Anschließend erfolgt im Schritt 122 die Korrelation der Vorklassifikationsergebnisse aus mehreren Aufnahmemodalitäten. Die unabhängigen Klassifikationsergebnisse K₁, K₂, K₃ der drei Aufnahmemodalitäten werden miteinander korreliert, um eine Entscheidung zu treffen, ob die biologische Probe 104' als gesund oder als tumorverdächtig einzustufen ist. Durch eine entsprechend geeignete Wahl der Entscheidungsgrenze wird auch durch diese Art von Vorklassifikation ca. 75% der Proben mit hoher Sicherheit als nicht tumorverdächtig aussortiert. Alle als tumorverdächtig eingestuften Proben werden in den nachfolgenden Schritten, die in Fig. 2B gezeigt sind, einer weiteren Klassifikationsstufe auf Zellebene unterworfen.

In Fig. 2B wird im Schritt 126 zuerst die Zellsegmentierung durchgeführt. Um alle tumorverdächtigen Bildproben genauer zu untersuchen und der Feindklassifikation zuzuführen, werden aus diesen Bildproben zunächst die einzelnen Zellen segmentiert. Die Segmentierung der Zellen geschieht wiederum auf allen drei Bildauszügen DL, PK und FL getrennt voneinandere. Das Resultat dieser Segmentierung bildet als kleinste Einheit Bildausschnitte mit - im Idealfall - jeweils einer einzelnen Zelle. Durch eine geeignete Präparation der Proben im Vorfeld wird sichergestellt, daß nur wenige Zellkonglomerate, d. h. Zellüberlappungen zu sehen sind.

Anschließend werden die segmentierten Zellen klassifiziert. Zunächst wird jede einzelne Zelle separat klassifiziert, wobei das oben beschriebene Verfahren zur automatischen, wissensbasierten Parameterselektion auch hier zum Einsatz kommt. Auf der Ebene der Zelle werden nicht nur Farb-, Textur-Parameter und statistische Parameter verwendet, sondern ferner auch Formparameter der segmentierten Zelle werden betrachtet. Auch hier werden mittels intelligenter Selektion aus einem Fundus von 600 bis 1000 deskriptiven Zellparametern diejenigen ausgewählt, mit denen die in den unterschiedlichen Aufnahmemodalitäten auftauchenden Zelltypen mit hoher Sicherheit voneinander unterschieden werden können.

Anschließend erfolgt eine Fusion der Klassifikationsergebnisse und eine Entscheidung. Die Klassifikation auf Zellebene wird zunächst für jede Bildmodalität getrennt voneinander durchgeführt, und anschließend müssen sowohl die segmentierten Zellen der drei Ansichten miteinander registriert werden, als auch die Klassifikationsergebnisse verrechnet werden, um zu einer differenzierten Diagnose zu gelangen.

Bei dem oben beschriebenen Ausführungsbeispiel können die Teilbilder bei den unterschiedlichen Aufnahmemodalitäten für die segmentierten Zellen entweder aufgrund der bereits im ersten Hauptschritt erzeugten Teilbilder durch einfache Segmentierung dieser erlangt werden, oder eine entsprechende Segmentierung der Probe und erneute Erzeugung der Bilder im zweiten Abschnitt wird durchgeführt.

Ferner wird darauf hingewiesen, daß das erfindungsgemäße Verfahren nicht auf das bevorzugte Ausführungsbeispiel beschränkt ist. Vielmehr ermöglicht das erfindungsgemäße Verfahren eine Analyse von biologischen Proben um festzustellen, ob diese Veränderungen gegenüber einem gesunden Gewebe aufweisen. Ausgehend von dieser Klassifizierung einer Probe sind verschiedene Möglichkeiten der weiteren Analyse möglich, sofern diese überhaupt erwünscht ist. Für einige Anwendungen kann es ausreichend sein festzustellen, daß Veränderungen der Probe gegenüber gesundem Gewebe bzw. gesunden Proben stattgefunden haben.

Bei wiederum anderen Anwendungen, z. B. Semi-automatisierten Analyseverfahren können einem Zytologen aus einer Gesamtprobe nur diejenigen Einzelproben zur weiteren Begutachtung zugeführt werden, die eine entsprechende verdächtige Veränderung des Materials aufweisen, und der Zytologe wird dann eine abschließende Beurteilung durchführen.

Die dritte Möglichkeit besteht in der vollständigen Automatisierung, wie sie oben anhand der Figuren beschrieben wurde.

## Patentansprüche

1. Rechner implementiertes Verfahren zur Analyse einer biologischen Probe (104') um eine Veränderung gegenüber einer gesunden biologischen Probe zu bestimmen, mit folgenden Schritten:
Erzeugen eines ersten Bildes der biologischen Probe bei einer ersten Aufnahmemodalität (DL);
Erzeugen eines zweiten Bildes der biologischen Probe bei einer zweiten Aufnahmemodalität (PK), wobei die erste Aufnahmemodalität und die zweite Aufnahmemodalität unterschiedlich sind, und wobei die erste Aufnahmemodalität und die zweite Aufnahmemodalität aus einer Gruppe von Aufnahmemodalitäten ausgewählt sind, die eine Durchlichtaufnahmemodalität, eine Fluoreszenzaufnahmemodalität und eine Phasenkontrastaufnahmemodalität umfaßt;
Klassifizieren (K₁) des ersten Bildes anhand eines ersten vorbestimmten Parameters;
Klassifizieren (K₂) des zweiten Bildes anhand eines zweiten vorbestimmten Parameters, wobei das erste Bild unabhängig von dem zweiten Bild klassifiziert wird; und
abhängig von den Klassifikationsergebnisse (E₁, E₂), Bestimmen (122) ob die biologische Probe (104') eine Veränderung gegenüber einer gesunden biologischen Probe aufweist.

2. Verfahren nach Anspruch 1, mit folgenden Schritten:
Erzeugen eines dritten Bildes der biologischen Probe (104') bei einer dritten Aufnahmemodaltität (FL); und
Klassifizierten (K₃) des dritten Bildes anhand eines dritten vorbestimmten Parameters, wobei das dritte Bild unabhängig von dem ersten Bild und von dem zweiten Bild klassifiziert wird.

3. Verfahren nach Anspruch 1 oder 2, das bei der Bestimmung einer Veränderung der biologischen Probe (104') die folgenden Schritte aufweist, um zu bestimmen, ob die Veränderung der biologischen Probe gutartig oder bösartig ist:
Festlegen (126) zumindest eines Abschnitts (128, 130, 132) der biologischen Probe (104'), wobei der Abschnitt im wesentlichen ein Element oder im wesentlichen einzelne Elemente aufweist;
Erzeugen eines ersten Teilbildes (DL) des Abschnitts der biologischen Probe bei einer vierten Aufnahmemodalität;
Erzeugen eines zweiten Teilbildes (PK) des Abschnitts der biologischen Probe bei einer fünften Aufnahmemodalität;
Klassifizieren (K) des ersten Teilbildes anhand eines vierten vorbestimmten Parameters;
Klassifizieren (K) des zweiten Teilbildes anhand eines fünften vorbestimmten Parameters, wobei das erste Teilbild unabhängig von dem zweiten Teilbild klassifiziert wird; und
abhängig von den Klassifikationsergebnissen (E), Bestimmen, ob die Veränderung der biologischen Probe gutartig oder bösartig ist.

4. Verfahren nach Anspruch 3, mit folgenden Schritten:
Erzeugen eines dritten Teilbildes (FL) des Abschnitts der biologischen Probe mit einer sechsten Aufnahmemodalität; und
Klassifizieren des dritten Teilbildes anhand eines sechsten vorbestimmten Parameters, wobei das dritte Teilbild unabhängig von dem ersten Teilbild und von dem zweiten Teilbild klassifiziert wird.

5. Verfahren nach einem der Ansprüche 3 oder 4, bei dem die biologische Probe eine Mehrzahl von Zellen umfaßt, wobei das erste Teilbild, das zweite Teilbild und das dritte Teilbild im wesentlichen eine Zelle oder im wesentlichen einzelne Zellen umfaßt.

6. Verfahren nach einem der Ansprüche 1 bis 5, bei dem die erste Aufnahmemodalität, die zweite Aufnahmemodalität, die dritte Aufnahmemodalität, die vierte Aufnahmemodalität, die fünfte Aufnahmemodalität und die sechste Aufnahmemodalität aus einer Gruppe ausgewählt sind, die Durchlicht, Phasenkontrast und Fluoreszenz umfaßt, und bei dem der erste vorbestimmte Parameter, der zweite vorbestimmte Parameter, der dritte vorbestimmte Parameter, der vierte vorbestimmte Parameter, der fünfte vorbestimmte Parameter und der sechste vorbestimmte Parameter aus einer Gruppe ausgewählt sind, die Zelldimensions-, Form-, Struktur-, Farb-, Textur-Merkmale und statistische Merkmale, morphometrische Daten und Daten der oxidativen Schädigung von Zellen umfaßt.

7. Verfahren nach Anspruch 6, bei dem die erste Aufnahmemodalität und die vierte Aufnahmemodalität die Durchsichtaufnahmemodalität sind, die zweite Aufnahmemodalität und die fünfte Aufnahmemodalität die Phasenkontrastaufnahmemodalität ist, und die dritte Aufnahmemodalität und die sechste Aufnahmemodalität die Fluoreszenzaufnahmemodalität sind, wobei für jede Aufnahmemodalität unabhängig voneinander jeweils ein eigener Parametersatz aus der Gruppe von vorbestimmten Parametern zur Klassifikation bestimmt wird.

## Claims

1. A computer-implemented method for the analysis of a biological sample (104') to determine a change relative to a healthy biological sample, comprising:
creating a first image of the biological sample at a first acquisition modality (DL);
creating a second image of the biological sample at a second acquisition modality (PK), the first acquisition modality and the second acquisition modality being different, and the first acquisition modality and the second acquisition modality being selected from a group of acquisition modalities including a transmitted-light acquisition modality, a fluorescence acquisition modality, and a phase contrast acquisition modality;
classifying (K₁) the first image on the basis of a first predetermined parameter;
classifying (K₂) the second image on the basis of a second pre-determined parameter, the first image being classified independently of the second image; and
depending on the classification results (E₁, E₂), determining (122) if the biological sample (104') comprises a change relative to a healthy biological sample.

2. The method of claim 1, comprising:
creating a third image of the biological sample (104') at a third acquisition modality (FL); and
classifying (K₃) the third image on the basis of a third predetermined parameter, the third image being classified independently of the first image and the second image.

3. The method of claim 1 or 2, comprising the following steps in the determination of a change of the biological sample (104'), in order to determine whether the change of the biological sample is benign or malign:
setting (126) at least one portion (128, 130, 132) of the biological sample (104'), the portion substantially comprising one element or substantially individual elements;
creating a first sub-image (DL) of the portion of the biological sample at a fourth acquisition modality;
creating a second sub-image (PK) of the portion of the biological sample at a fifth acquisition modality;
classifying (K) the first sub-image on the basis of a fourth predetermined parameter;
classifying (K) the second sub-image on the basis of a fifth predetermined parameter, the first sub-image being classified independently of the second sub-image; and
depending on the classification results (E), determining whether the change of the biological sample is benign or malign.

4. The method of claim 3, comprising:
creating a third sub-image (FL) of the portion of the biological sample with a sixth acquisition modality; and
classifying the third sub-image on the basis of a sixth predetermined parameter, the third sub-image being classified independently of the first sub-image and the second sub-image.

5. The method of claim 3 or 4, wherein the biological sample includes a plurality of cells, with the first sub-image, the second sub-image, and the third sub-image substantially including a cell or substantially individual cells.

6. The method of one of claims 1 to 5, wherein the first acquisition modality, the second acquisition modality, the third acquisition modality, the fourth acquisition modality, the fifth acquisition modality, and the sixth acquisition modality are selected from a group including transmitted light, phase contract, and fluorescence, and wherein the first pre-determined parameter, the second pre-determined parameter, the third pre-determined parameter, the fourth predetermined parameter, the fifth pre-determined parameter, and the sixth pre-determined parameter are selected from a group including cell dimension, shape, structure, color, texture, and statistical features, morphometric data, and data of the oxidative damage of cells.

7. The method of claim 6, wherein the first acquisition modality and the fourth acquisition modality are the transmitted light acquisition modality, the second acquisition modality and the fifth acquisition modality are the phase contrast acquisition modality, and the third acquisition modality and the sixth acquisition modality are the fluorescent acquisition modality, wherein for each acquisition modality a parameter set each is determined independently of each other from the group of predetermined parameters for classification.

## Revendications

1. Procédé mis en oeuvre par ordinateur pour l'analyse d'un échantillon biologique (104'), pour déterminer une modification par rapport à un échantillon biologique sain, aux étapes suivantes consistant à :
générer une première image de l'échantillon biologique dans une première modalité de prise de vue (DL) ;
générer une deuxième image de l'échantillon biologique dans une deuxième modalité de prise de vue (PK), la première modalité de prise de vue et la seconde modalité de prise de vue étant différentes, et la première modalité de prise de vue et la seconde modalité de prise de vue étant sélectionnées parmi un groupe de modalités de prise de vue comprenant une modalité de prise de vue transparence, une modalité de prise de vue fluorescence et une modalité de prise de vue contraste de phase ;
classifier (K₁) la première image sur base d'un premier paramètre prédéterminé ;
classifier (K₂) la deuxième image sur base d'un deuxième paramètre prédéterminé, la première image étant classifiée indépendamment de la deuxième image ; et
indépendamment des résultats de classification (E₁, E₂), déterminer (122) si l'échantillon biologique (104') présente une modification par rapport à un échantillon biologique sain.

2. Procédé selon la revendication 1, aux étapes suivantes consistant à :
générer une troisième image de l'échantillon biologique (104') dans une troisième modalité de prise de vue (FL) ; et
classifier (K₃) la troisième image sur base d'un troisième paramètre prédéterminé, la troisième image étant classifiée indépendamment de la première image et de la deuxième image.

3. Procédé selon la revendication 1 ou 2, présentant, lors de la détermination d'une modification de l'échantillon biologique (104'), les étapes suivantes, pour déterminer si la modification de l'échantillon biologique est bénigne ou maligne :
fixer (126) au moins un segment (128, 130 ; 132) de l'échantillon biologique (104'), le segment présentant substantiellement un élément ou substantiellement des éléments individuels ;
générer une première image partielle (DL) du segment de l'échantillon biologique dans une quatrième modalité de prise de vue ;
générer une deuxième image partielle (PK) du segment de l'échantillon biologique dans une cinquième modalité de prise de vue ;
classifier (K) la première image partielle sur base d'un quatrième paramètre prédéterminé ;
classifier (K) la deuxième image partielle sur base d'un cinquième paramètre prédéterminé, la première image partielle étant classifiée indépendamment de la deuxième image partielle, et
indépendamment des résultats de classification (E), déterminer si la modification de l'échantillon biologique est bénigne ou maligne.

4. Procédé selon la revendication 3, aux étapes suivantes consistant à :
générer une troisième image partielle (FL) du segment de l'échantillon biologique dans une sixième modalité de prise de vue ; et
classifier la troisième image partielle sur base d'un sixième paramètre prédéterminé, la troisième image partielle étant classifiée indépendamment de la première image partielle et de la deuxième image partielle.

5. Procédé selon l'une des revendications 3 ou 4, dans lequel l'échantillon biologique comporte une pluralité de cellules, la première image partielle, la deuxième image partielle et la troisième image partielle comprenant substantiellement une cellule ou substantiellement des cellules individuelles.

6. Procédé selon l'une des revendications 1 à 5, dans lequel la première modalité de prise de vue, la deuxième modalité de prise de vue, la troisième modalité de prise de vue, la quatrième modalité de prise de vue, la cinquième modalité de prise de vue et la sixième modalité de prise de vue sont choisies parmi un groupe comprenant transparence, contraste de phase et fluorescence, et dans lequel le premier paramètre prédéterminé, le deuxième paramètre prédéterminé, le troisième paramètre prédéterminé, le quatrième paramètre prédéterminé, le cinquième paramètre prédéterminé et le sixième paramètre prédéterminé sont choisis parmi un groupe comportant des caractéristiques de dimensions de cellule, de forme, de structure, de couleur, de texture et des caractéristiques statistiques, des données morphométriques et des données de dégradation par oxydation des cellules.

7. Procédé selon la revendication 6, dans lequel la première modalité de prise de vue et la quatrième modalité de prise de vue sont la modalité de prise de vue transparence, la deuxième modalité de prise de vue et la cinquième modalité de prise de vue sont la modalité de prise de vue contraste de phase et la troisième modalité de prise de vue et la sixième modalité de prise de vue sont la modalité de prise de vue fluorescence, pour chaque modalité de prise de vue étant déterminé, pour la classification, indépendamment un ensemble de paramètres propre parmi le groupe de paramètres prédéterminés.
